(19)

Europäisches
Patentamt
European
Patent Office
Office européen
des brevets

(11) **EP 4 329 374 A1**

(12) **EUROPEAN PATENT APPLICATION**
published in accordance with Art. 153(4) EPC

(43) Date of publication:
**28.02.2024   Bulletin 2024/09**

(21) Application number: **22803981.4**

(22) Date of filing: **18.05.2022**

(51) International Patent Classification (IPC):
**H04W 40/02** (2009.01)

(52) Cooperative Patent Classification (CPC):
**H04W 40/02; H04W 40/24; H04W 40/36**

(86) International application number:
**PCT/CN2022/093444**

(87) International publication number:
**WO 2022/242661 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **21.05.2021   CN 202110557277**

(71) Applicant: **Huawei Technologies Co., Ltd.
Longgang
Shenzhen, Guangdong 518129 (CN)**

(72) Inventors:
• **ZHAO, Mingyu
  Shenzhen, Guangdong 518129 (CN)**
• **YAN, Xueqiang
  Shenzhen, Guangdong 518129 (CN)**
• **WU, Jianjun
  Shenzhen, Guangdong 518129 (CN)**

(74) Representative: **Thun, Clemens
Mitscherlich PartmbB
Patent- und Rechtsanwälte
Karlstraße 7
80333 München (DE)**

(54)   **COMMUNICATION PROCESSING METHOD AND RELATED DEVICE**

(57)   Embodiments of this application provide a communication processing method and a related device. The method includes: when sensing that authentication between a user service node and a user equipment is completed, planning a communication path between the user service node and the user equipment to obtain a first path, where the user service node is configured to provide a service for the user equipment; calculating a first target quantity based on the first path, where the first target quantity is for calculating an egress port number used by a forwarding device on the first path to forward data; and sending the first target quantity to an ingress forwarding device, where the ingress forwarding device is a next-hop device of a device at a start point on the first path, and the first target quantity is for adding to data that is sent by the ingress forwarding device to an end point device on the first path. In this application, a processing load of a control node may be reduced, and data transmission efficiency may be improved.

S501: When sensing that authentication is completed between a user service node and a user equipment , plan a communication path between the user service node and the user equipment to obtain a first path, where the user service node is configured to provide a service for the user equipment

S502: The network service node calculates a first target quantity based on the first path, where the first target quantity is for calculating an egress port number used by a forwarding device on the first path to forward a data packet

S503: The network service node sends the first target quantity to an ingress forwarding device, where the ingress forwarding device is a next-hop device of a device at a start point in the first path, and the first target quantity is for adding to data that is sent by the ingress forwarding device to an end point device on the first path

FIG. 5

EP 4 329 374 A1

**Description**

This application claims priority to Chinese Patent Application No. 202110557277.4, filed with the China Intellectual Property Administration on May 21, 2021 and entitled "COMMUNICATION PROCESSING METHOD AND RELATED DEVICE", which is incorporated herein by reference in its entirety.

**TECHNICAL FIELD**

The present invention relates to the field of communication technologies, and in particular, to a communication processing method and a related device.

**BACKGROUND**

Existing mobile communication systems are all network-centric, and a user adapts to the network. In other words, the user can only select a function provided by the network. Especially, a large-granularity function provided by a central core network cannot meet a personalized requirement of the user. The user is increasingly pursuing a personalized service. In addition, the Internet of Things (IoT) brings about a sharp increase in terminal types. A function needs to be customized on demand. For example, paging is not required for a terminal that is not mobile, and some IoT terminals do not require voice functions.

An existing central core network element (mobility management, session management, user data management, and policy management) entity can generally process a large quantity of users, and is centrally deployed. There are risks of a single point failure and a distributed deny of service (distributed deny of service, DDoS) attack. This causes a huge property and reputation loss. Personal data of the user lacks a trusted and secure mechanism and cannot meet an increasingly strict data privacy protection trend and requirement. To resolve the foregoing problems, a user-centric network (user-centric network, UCN) architecture is proposed. In the UCN architecture, each user equipment (user equipment, UE) has a user service node (network service node, USN). The USN is generated by a network service node (network service node, NSN). The USN can be dynamically generated and migrated with the user as required, implementing user-centric network architecture design.

In the future, an edge cloud will be widely deployed. As a result, traffic will be centered on distributed data center (data center, DC)/multi-access edge computing (multi-access edge computing, MEC). In addition, a quantity of access terminals increases sharply, causing exponential growth of the traffic. In the future, traffic will be distributed and local. This is different from a traditional traffic mode that traffic is accessed, converged, and concentrated, and then transmitted to a core gateway. As a result, data forwarding between a terminal and the core gateway is more distributed, dynamic, of a short distance, and of short hop counts, and a routing table is expanded due to a traffic surge. Therefore, a routing method that meets these new requirements needs to be researched.

**SUMMARY**

Embodiments of this application disclose a communication processing method and a related device, to be applicable to a distributed DC/MEC-centric network architecture in which data forwarding is distributed, dynamic, of a short distance, and of short hop counts. This can effectively avoid a problem of routing table expansion caused by a traffic surge, reduce complex configuration, reduce a processing load of a control node, and improve data transmission efficiency.

According to a first aspect, this application provides a communication processing method, where the method includes:

when sensing that authentication between a user service node and a user equipment is completed, planning a communication path between the user service node and the user equipment to obtain a first path, where the user service node is configured to provide a service for the user equipment;

calculating a first target quantity based on the first path, where the first target quantity is for calculating an egress port number used by a forwarding device on the first path to forward data; and

sending the first target quantity to an ingress forwarding device, where the ingress forwarding device is a next-hop device of a device at a start point on the first path, and the first target quantity is for adding to data that is sent by the ingress forwarding device to an end point device on the first path.

Optionally, the user service node and the user equipment belong to a node covered by a same edge cloud.

In this application, after the user equipment (user equipment, UE) is bound to the user service node USN, a communication path between the user equipment (user equipment, UE) and the user service node USN is planned, and communication between the user equipment (user equipment, UE) and the user service node USN is performed based on a method of a residue number system. Because the LTE is bound to the USN of the LTE, an uplink transmission path is definitely from the UE to the USN of the LTE, and a downlink transmission path is definitely from the USN to the corresponding UE of the USN. Therefore, for uplink and downlink data, when the UE is initially bound to the USN of the UE, the NSN performs routing calculation between the UE and the USN, and delivers a corresponding target quantity to an ingress forwarding device of the communication path. The target quantity may be repeatedly used, and does not need to be frequently calculated subsequently unless a routing condition changes; and unlike an OpenFlow or KeyFlow protocol in the existing solution in which each time one new data packet reaches an ingress router, a packet-in message needs to be triggered, the data packet is thrown to a controller, and the controller replans a route. In other words, in this application, a processing load of the NSN may be greatly reduced, and performance of the NSN may be improved. In addition, because the communication path does not need to be calculated in real time, a signaling communication load may be further reduced, a data transmission delay may be further reduced, and data transmission efficiency may be improved.

In addition, the communication processing method in this application meets a requirement for data forwarding that is more distributed, dynamic, and is of a short distance/short hop counts a distributed DC/MEC-centric traffic model in the future, and is perfectly combined with a distributed MEC architecture. Compared with a current mainstream SR solution and a KeyFlow+SDN solution, the communication processing method is simpler in configuration and protocols, and may greatly reduce deployment and maintenance costs and improve deployment and maintenance efficiency.

In addition, in the communication processing method in this application, a routing table is not required. This avoids a problem of routing table expansion caused by a traffic surge. In addition, complex path calculation is performed by the NSN in a central manner. Compared with the existing MPLS and SR, the communication processing method reduces a load of a forwarding device, and greatly reduces complex configuration.

In a possible implementation, the method further includes:

when the first path cannot perform communication between the user service node and the user equipment, planning a communication path between the user equipment and the user service node to obtain a second path;
calculating a second target quantity based on the second path, where the second target quantity is for calculating an egress port number used by a forwarding device on the second path to forward data; and
sending the second target quantity to the ingress forwarding device, where the second target quantity is for adding to data that is sent by the ingress forwarding device to an end point device on the second path.

In this application, if the originally planned communication path between the UE and the USN cannot perform communication, a new path may be replanned, so that data communication interruption may be avoided, and reliability and performance of a communication network may be improved.

In a possible implementation, the first path is a path from the user equipment to the user service node; the ingress forwarding device is an access device that enables the user equipment to access a communication network; and that the first path cannot perform communication between the user service node and the user equipment includes: changing an access device that enables the user equipment to access the communication network.

In this application, when the access device of the user equipment UE is switched in this application, a new communication path may be sensed and planned in time, to ensure normal communication between the UE and the USN.

According to a second aspect, this application provides a communication processing method, where the method includes:

receiving a first target quantity, where the first target quantity is used to forward communication data between a user service node and a user equipment based on a first path, the first path is obtained through planning when authentication between the user service node and the user equipment is completed, and the user service node is configured to provide a service for the user equipment;
receiving first data, and finding the first target quantity based on the first data;
writing the first target quantity into the first data to obtain second data; and
calculating an egress port number based on the first target quantity, and sending the second data from the egress port number.

In this application, an execution entity of the communication processing method may be the ingress forwarding device on the first path. After the UE is bound to the USN, the ingress forwarding device may receive the first target quantity sent by the network service node. When data between the UE and the USN needs to be forwarded through the first path, the ingress forwarding device adds the first target quantity to data that needs to be forwarded, calculates, based on the first target quantity, an egress port number for data forwarding, and forwards the data without querying a routing table. This prevents the problem of the routing table expansion caused by the traffic surge. In addition, unlike an OpenFlow or KeyFlow protocol in an existing solution in which each time one new data packet reaches an ingress router, a packet-in message needs to be triggered, the data packet is thrown to a controller, and the controller replans a route. Therefore, a processing load of the ingress forwarding device is also reduced.

In addition, in an existing routing solution in which the OpenFlow or KeyFlow protocol is used, when performing data forwarding, the ingress router still needs to query a table to obtain the egress port number, instead of calculating the egress port number through a target quantity. Therefore, compared with the existing solution, in this application, the ingress forwarding device calculates an egress port number of data through the target quantity, and does not need to search for an egress port by querying a table. This resolves a problem such as occupation of excessive storage resources caused by expansion of a routing table or a flow table.

In a possible implementation, the method further includes: receiving a second target quantity, and replacing the locally stored first target quantity with the second target quantity, where the second target quantity is used to forward communication data between the user service node and the user equipment based on a second path, and the second path is obtained through planning when the first path cannot perform communication between the user service node and the user equipment.

In this application, after the communication path between the UE and the USN is replanned, the ingress forwarding device receives the second target quantity, and then replaces a first target quantity corresponding to an original path, to ensure that data communication between the UE and the USN may be normally performed without interruption.

According to a third aspect, this application provides a communication processing apparatus, where the apparatus includes:

a planning unit, configured to: when sensing that authentication between a user service node and a user equipment is completed, plan a communication path between the user service node and the user equipment to obtain a first path, where the user service node is configured to provide a service for the user equipment;

a calculation unit, configured to calculate a first target quantity based on the first path, where the first target quantity is for calculating an egress port number used by a forwarding device on the first path to forward data; and

a sending unit, configured to send the first target quantity to an ingress forwarding device, where the ingress forwarding device is a next-hop device of a device at a start point on the first path, and the first target quantity is for adding to data that is sent by the ingress forwarding device to an end point device on the first path.

In a possible implementation, the user service node and the user equipment belong to a node covered by a same edge cloud.

In a possible implementation, the planning unit is further configured to: when the first path cannot perform communication between the user service node and the user equipment, plan a communication path between the user equipment and the user service node to obtain a second path, where

the calculation unit is further configured to calculate a second target quantity based on the second path, where the second target quantity is for calculating an egress port number used by a forwarding device on the second path to forward data; and

the sending unit is further configured to send the second target quantity to the ingress forwarding device, where the second target quantity is for adding to data that is sent by the ingress forwarding device to an end point device on the second path.

In a possible implementation, the first path is a path from the user equipment to the user service node; the ingress forwarding device is an access device that enables the user equipment to access a communication network; and that the first path cannot perform communication between the user service node and the user equipment includes: changing an access device that enables the user equipment to access the communication network.

According to a fourth aspect, this application provides a communication processing apparatus, where the apparatus includes:

a receiving unit, configured to receive a first target quantity, where the first target quantity is used to forward communication data between a user service node and a user equipment based on a first path, the first path is obtained through planning when authentication between the user service node and the user equipment is completed, and the user service node is configured to provide a service for the user equipment, where the receiving unit is further configured to receive first data, and find the first target quantity based on the first data;

a writing unit, configured to write the first target quantity into the first data to obtain second data;

a calculation unit, configured to calculate an egress port number based on the first target quantity; and

a sending unit, configured to send the second data from the egress port number.

In a possible implementation, the receiving unit is further configured to:
receive a second target quantity, and replace the locally stored first target quantity with the second target quantity, where the second target quantity is used to forward communication data between the user service node and the user equipment based on a second path, and the second path is obtained through planning when the first path cannot perform communication between the user service node and the user equipment.

According to a fifth aspect, this application provides a communication processing apparatus. The apparatus may include a processor and a memory, configured to implement the communication processing method according to the first aspect and possible implementations of the first aspect. The memory is coupled to the processor. When executing the computer program stored in the memory, the processor may implement the method according to the first aspect or any possible implementation of the first aspect. The apparatus may further include a communication interface. The communication interface is used by the apparatus to communicate with another apparatus. For example, the communication interface may be a transceiver, a circuit, a bus, a module, or another type of communication interface. The communication interface includes a receiving interface and a sending interface. The receiving interface is configured to receive a message, and the sending interface is configured to send a message.

In a possible implementation, the apparatus may include:

a memory, configured to store a computer program; and
a processor, configured to: when sensing that authentication between a user service node and a user equipment is completed, plan a communication path between the user service node and the user equipment to obtain a first path, where the user service node is configured to provide a service for the user equipment; calculate a first target quantity based on the first path, where the first target quantity is for calculating an egress port number used by a forwarding device on the first path to forward data; and send the first target quantity to an ingress forwarding device through a communication interface, where the ingress forwarding device is a next-hop device of a device at a start point on the first path, and the first target quantity is for adding to data that is sent by the ingress forwarding device to an end point device on the first path.

It should be noted that the computer program in the memory in this application may be pre-stored, or may be downloaded from the internet and then stored when the apparatus is used. A source of the computer program in the memory is not specifically limited in this application. The coupling in embodiments of this application is indirect coupling or connection between apparatuses, units, or modules for information exchange between the apparatuses, the units, or the modules, and may be in electrical, mechanical, or other forms.

According to a sixth aspect, this application provides a communication processing apparatus. The apparatus may include a processor and a memory, configured to implement the communication processing method according to the second aspect and possible implementations of the second aspect. The memory is coupled to the processor. When executing the computer program stored in the memory, the processor may implement the method according to the second aspect or any possible implementation of the second aspect. The apparatus may further include a communication interface. The communication interface is used by the apparatus to communicate with another apparatus. For example, the communication interface may be a transceiver, a circuit, a bus, a module, or another type of communication interface. The communication interface includes a receiving interface and a sending interface. The receiving interface is configured to receive a message, and the sending interface is configured to send a message.

In a possible implementation, the apparatus may include:

a memory, configured to store a computer program; and
a processor, configured to receive a first target quantity through a communication interface, where the first target quantity is used to forward communication data between a user service node and a user equipment based on a first path, the first path is obtained through planning when authentication between the user service node and the user equipment is completed, and the user service node is configured to provide a service for the user equipment; receive first data through the communication interface, and find the first target quantity based on the first data; write the first target quantity into the first data to obtain second data; and calculate an egress port number based on the first target quantity, and send the second data from the egress port number through the communication interface.

It should be noted that the computer program in the memory in this application may be pre-stored, or may be downloaded from the internet and then stored when the apparatus is used. A source of the computer program in the memory is not specifically limited in this application. The coupling in embodiments of this application is indirect coupling or connection between apparatuses, units, or modules for information exchange between the apparatuses, the units, or the modules, and may be in electrical, mechanical, or other forms.

According to a seventh aspect, this application provides a computer-readable storage medium, where the computer-readable storage medium stores a computer program, and the computer program is executed by a processor to implement the method according to the first aspect or any possible implementation of the first aspect; or the computer program is executed by a processor to implement the method according to the second aspect.

According to an eighth aspect, this application provides a computer program product. When the computer program product runs on a computer, the computer is enabled to perform the method according to any one of the first aspect; or the computer is enabled to perform the method according to the second aspect.

It may be understood that the apparatus according to the third aspect, the fourth aspect, the fifth aspect, and the sixth aspect, the computer storage medium according to the seventh aspect, and the computer program product according to the eighth aspect are all configured to perform the method according to any one of the first aspect or the second aspect. Therefore, for beneficial effects that can be achieved by the method, refer to beneficial effects in the corresponding method. Details are not described herein again.

## BRIEF DESCRIPTION OF DRAWINGS

The following briefly describes the accompanying drawings for embodiments of this application.

FIG. 1 to FIG. 3 are schematic diagrams of scenarios according to an embodiment of this application;
FIG. 4 is a schematic diagram of comparison between a network architecture and a conventional network architecture according to this application;
FIG. 5 is a schematic flowchart of a communication processing method according to this application;
FIG. 6 is a schematic diagram of a transmission path according to this application;
FIG. 7 is a schematic diagram of a structure of an edge cloud according to this application;
FIG. 8 and FIG. 9 are schematic diagrams of a logical structure of an apparatus according to this application; and
FIG. 10 and FIG. 11 are schematic diagrams of an entity structure of an apparatus according to this application.

## DESCRIPTION OF EMBODIMENTS

The following describes embodiments of this application with reference to the accompanying drawings.

First, a residue number system in this application is described.

The residue number system (residue number system, RNS) is based on a Chinese remainder theorem (Chinese remainder theorem, CRT). The principle is described as follows:

1. {m1, m2, m3, ..., mN} is a group of mutual prime arrays, and N is an integer greater than 1;
2. {x1, x2, x3, ..., xN} is a group of integer arrays;
3. Any integer X less than M may be represented as a set of N smaller integers in a defined residue number system; and
4. xi=<X> mi, and xi may be obtained by performing a modulo operation on X through corresponding mi. In the following description of this application, X may be referred to as a target quantity.

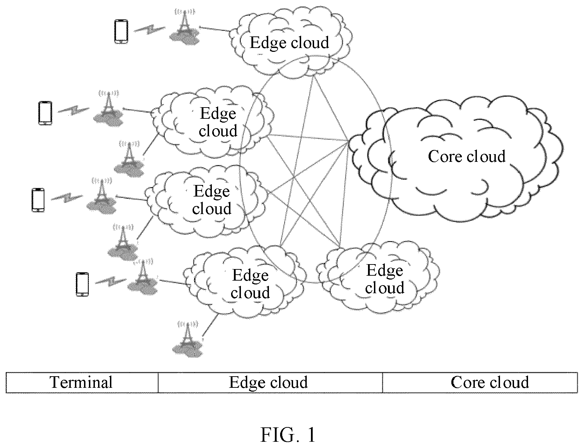

An edge cloud is a small-scale cloud data center distributed at a network edge side and provides real-time data processing and analysis decision-making. Based on advantages of the edge cloud, network edge cloudification becomes an inevitable trend. The edge cloud and a core cloud (the core cloud is a large cloud service data center) collaborate and complement each other. The edge cloud is closer to a user and may better support an application that has a high requirement on a delay and data privacy, and is suitable for distributed deployment of a network function. For an example of a scenario in which an edge cloud is deployed, refer to FIG. 1.

As shown in FIG. 1, an entire system architecture may be divided into three layers: a terminal layer, an edge cloud layer, and a core cloud layer. A terminal at the terminal layer accesses the edge cloud through an access device such as a base station or a wireless access point. The terminal is a user equipment (user equipment, LTE). A plurality of edge clouds at the edge cloud layer may establish a communication connection with each other, and the plurality of edge clouds establish communication connections with the core cloud. Both the edge cloud and the core cloud may provide application services (application services, APPs).

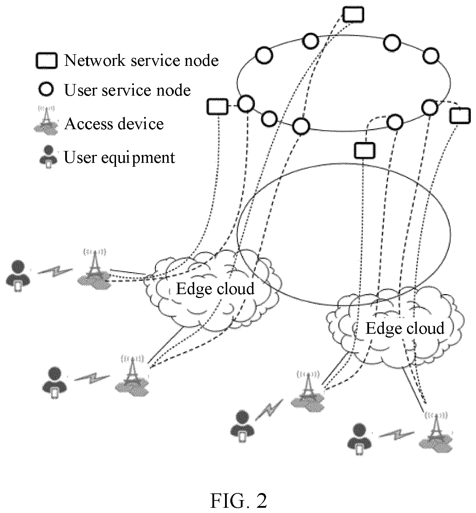

Based on the scenario shown in FIG. 1, a user-centric (user-centric network, UCN) network architecture may be designed. For example, refer to FIG. 2. FIG. 2 is an example of a schematic diagram of a network architecture of a UCN. It may be learnt that a network service node (network service node, NSN) and a user service node (network service node, USN) are deployed on an edge cloud, and each user equipment UE corresponds to a user service node USN of the user equipment UE. The user service node USN may provide a required service for a user equipment UE bound to the user service node USN. The network service node NSN may provide a required service for a USN in the edge cloud in which the network service node NSN is located, a terminal corresponding to the USN, and the like.

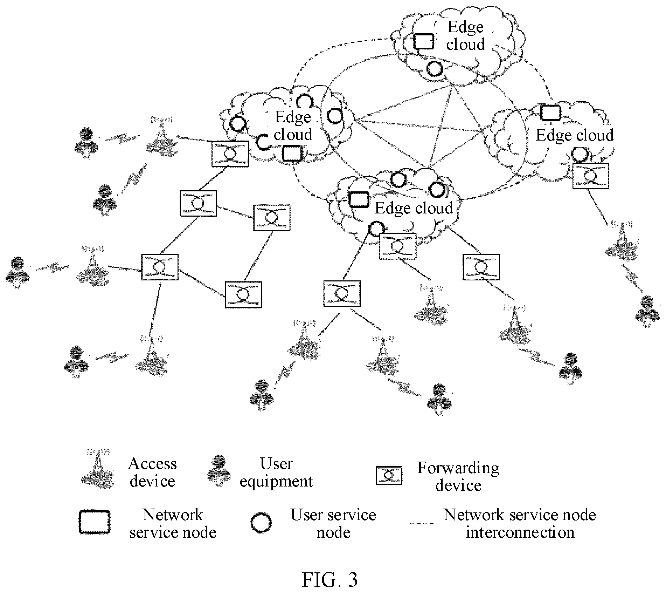

For example, FIG. 3 is a schematic diagram of another UCN network architecture. It may be learnt that in the UCN network architecture, one network service node NSN is deployed on the core cloud and each edge cloud, and these NSNs may communicate with each other. One or more user service nodes USNs are further deployed in each edge cloud, and each USN is associated with and bound to one user equipment UE. Data transmitted between the USN and the UE is forwarded through a forwarding device. The forwarding device may be, for example, a device that may forward data, such as an access device, a router, a gateway, or a switch. The access device is, for example, a base station or a wireless access point.

It should be noted that the network service node NSN and the user service node USN may be application service software deployed in a server. Optionally, a plurality of NSNs and a plurality of USNs may be deployed in one server or one server cluster, or one NSN and one or more USNs are deployed in one server or one server cluster, or one NSN is deployed in one server or one server cluster, and each USN is independently deployed on one server. Specific deployment of the NSN or the USN is not limited in this application.

In a possible embodiment, each edge cloud is one multi-access edge computing (multi-access edge computing, MEC) domain, and a node and a device in the edge cloud belong to a node and a device in the MEC domain.

The foregoing UCN network architecture is centered on a distributed DC/MEC, and a sharp increase of a quantity of access terminals causes an exponential increase of traffic. In the future, traffic will be distributed and local, and data forwarding between a terminal and a core gateway is more distributed, dynamic, of a short distance, and of short hop counts. However, a traffic surge causes routing table expansion. Therefore, a data communication routing rule that meets features of the UCN network architecture needs to be designed. Before this, the existing routing rules are analyzed.

For example, in an existing classic internet protocol (internet protocol, IP) routing table solution, a forwarding egress and a next-hop route are determined by a router along the route by querying a routing table. However, in a new traffic model of a future-oriented network, there are the following problems: As a quantity of terminals increases exponentially, a problem of routing table expansion is caused.

For another example, in an existing solution of KeyFlow + a software defined network (software defined network, SDN), a KeyFlow application is deployed on an OpenFlow controller, and is configured to obtain a target quantity through calculation through the foregoing residue number system RNS and deliver the target quantity. Specifically, an ingress edge router throws a data packet to a controller. The controller calculates a forwarding path and the target quantity, generates a header including the target quantity (the header may be referred to as an RNS header), and delivers the header to the ingress edge router and the egress edge router. The ingress router adds the header including the target quantity to the data, calculates an egress port along a route based on the target quantity, and forwards the egress port. The header including the target quantity is stripped in the egress edge router.

The header including the target quantity may be referred to as an RNS header. In addition to the target quantity, the RNS header may further include information such as a source destination address and a destination address of the data packet. A specific procedure of the KeyFlow + SDN solution is described as follows:

Step 1: A data packet from an autonomous domain 1 enters an ingress edge router, triggers a packet-in message, and sends the data packet to an OpenFlow controller; a KeyFlow application obtains a destination address from the data packet, and plans a route based on a real-time network topology, where a planning result is from a router 4->3->5 to an egress edge router; and then a target quantity of 25 is obtained through calculation based on an RNS;

Step 2: The OpenFlow controller generates an RNS header including 25, and sends the RNS header to the ingress edge router and the egress edge router through flow-mod information. After receiving the header, the ingress edge router and the egress edge router add one new flow table, to indicate that the data packet enters a KeyFlow domain, and perform routing based on the RNS header;

Step 3: The OpenFlow controller sends a modified-field action message to the ingress edge router, to indicate the ingress edge router to write the RNS header into a data packet header. The ingress edge router forwards the data packet to a router 4, and a remainder of 25/4 is 1; then forwards the data packet from a port 1 to a router 3, and a remainder of 25/3 is 1; then forwards the data packet from the port 1 to a router 5, and a remainder of 25/5 is 0; and then forwards the data packet from a port 0 to the egress edge router; and

Step 4: The OpenFlow controller sends the modified-field action message to the egress edge router, to indicate the egress edge router to remove the RNS header. Further, forwarding is performed based on a destination address.

The KeyFlow + SDN solution has the following disadvantages: 1. For an SDN controller, because traffic increases sharply, traffic is heavy in a short period of time and changes dynamically. When these new data packets are sent to a controller, performance of the controller deteriorates sharply. In addition, a route forwarding table needs to be updated frequently, which increases a signaling load and a delay. 2. The KeyFlow needs to obtain source and destination address information of the data packet by using a packet-in function of the Open-flow protocol, which requires an additional operation and consumes more processing resources. In addition, the Open-flow protocol is complex, and costs are high during implementation.

For another example, a multi-protocol label switching (multi-Protocol label switching, MPLS) solution and a segment routing (segment routing, SR) solution. In the two solutions, resource reservation protocol-traffic engineering (resource reservation protocol-traffic engineering, RSVP-TE) floods through an interior gateway protocol (interior gateway protocol, IGP). After convergence, each device obtains a state of each path, performs path calculation based on a constraint condition, and then sends a packet hop by hop, to request a reserved bandwidth and allocate labels. SR is an improved MPLS solution and has great potential. SR-BE (best effort) is a shortest path forwarding model. The SR-BE guides packet forwarding by using a prefix label or a node label, and does not require a controller. The segment routing-traffic engineering (segment routing-traffic engineering, SR-TE) requires the controller. After central path calculation, the controller sends a series of labels to an ingress node of a tunnel, to control a forwarding path.

SR-TE is formed by combining advantages of a label distribution protocol (label distribution protocol, LDP) and the RSVP-TE. Specifically, 1. a signaling mechanism of the RSVP-TE is removed. A root cause of a complex protocol mechanism is that each device needs to maintain a set of complex signaling. After obtaining path information through an extended IGP, the RSVP-TE calculates a proper path and establishes a tunnel by sending RSVP-TE signaling. Because a current link may change and convergence takes time, the convergence may occur at a moment at which the path is calculated. Therefore, a mechanism is required to confirm the path again and reserve a bandwidth before each tunnel sends a packet. This is a function of the RSVP-TE signaling. A reason is that the RSVP-TE is a distributed architecture. Each device may only view a state of the device. To know a state of another device, a signaling mechanism needs to be used. However, in the distributed architecture, if one central control node is added, to perform path calculation and label distribution in a unified manner, the problem is resolved. Therefore, SR and SDN are a good match. 2. LDP high efficiency and load balancing are introduced to the RSVP-TE. The RSVP-TE determines a path at a source end. Sometimes, a plurality of paths meet a requirement, but the RSVP-TE cannot perform load balancing. (1) IGP is directly used to distribute labels, which extends an IGP protocol. IGP signaling is used to directly carry label information, which prevents a traffic black hole. (2) A node ID (global label) is set to independently identify a device. The node ID is globally valid and unique. In this way, a global identifier may be used to query a table and perform forwarding. (3) An adjacent ID (adjacent label) is set. The adjacent ID is locally valid and directional. The adjacent ID locally and uniquely identifies a link. In this way, a requirement for selecting a specific route is met.

For the SR-TE, load balancing may be implemented on road sections that require load balancing. For example, two paths may be selected at will from Shanghai to Nanjing. On road sections that require strict route selection, for example, a path from Nanjing to Taiyuan and then to Xi'an is strictly specified, to avoid a congestion path from Nanjing to Xi'an.

However, the MPLS solution and SR solution have the following problems: 1. Configurations of the RSVP-TE are complex and protocols are complex, which cannot be applied on a large scale. 2. Compared with the RSVP-TE, the SR-TE has simplified configurations but still requires complex label configurations, and protocols are also complex. 3. MPLS and SR are more widely used on a backbone network. 4. A label stack of the SR-TE cannot be infinitely large. To resolve the problem, a stitching label is required.

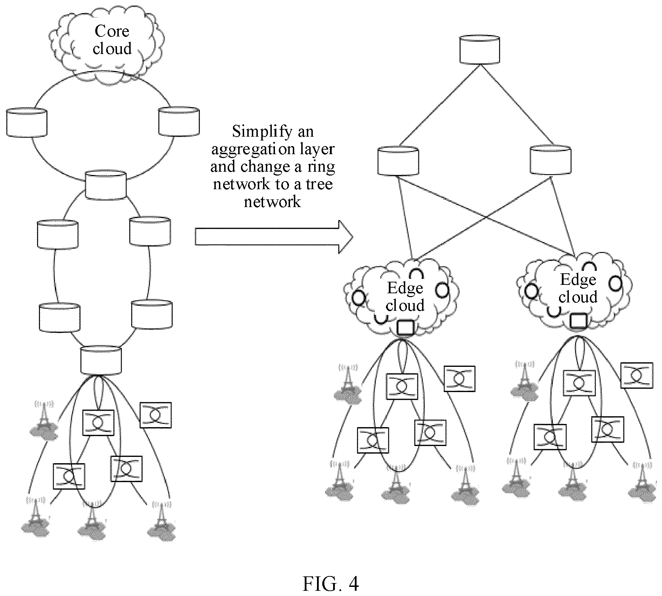

The foregoing existing application scenarios of the routing rule are all conventional three-layer network architectures, which are different from the UCN network architecture. For ease of understanding, refer to FIG. 4. FIG. 4 is an example of a schematic diagram of comparison between a three-layer network architecture and a UCN network architecture. It may be learnt that the UCN network architecture simplifies an aggregation layer of a classic network architecture, and changes a ring network at the aggregation layer to a tree network. In addition, an edge cloud in a UCN network is ubiquitous, and most traffic is forwarded and terminated at a network edge, so that the traffic is centered on a distributed DC/MEC.

In the UCN network architecture, a sharp increase of a quantity of access terminals causes traffic to increase in an exponential trend, and the sharp increase of traffic causes a routing table to expand. In addition, in the future, the traffic will be distributed and local, and data forwarding between a terminal and a core gateway is more distributed, dynamic, of a short distance, and of short hop counts. Based on these characteristics, if the foregoing existing routing rule is applied to the UCN network architecture, a defect of the foregoing existing routing solution is more prominent. Therefore, this application provides a communication processing method applicable to the UCN network architecture, to resolve a routing problem of data sending in the UCN network architecture.

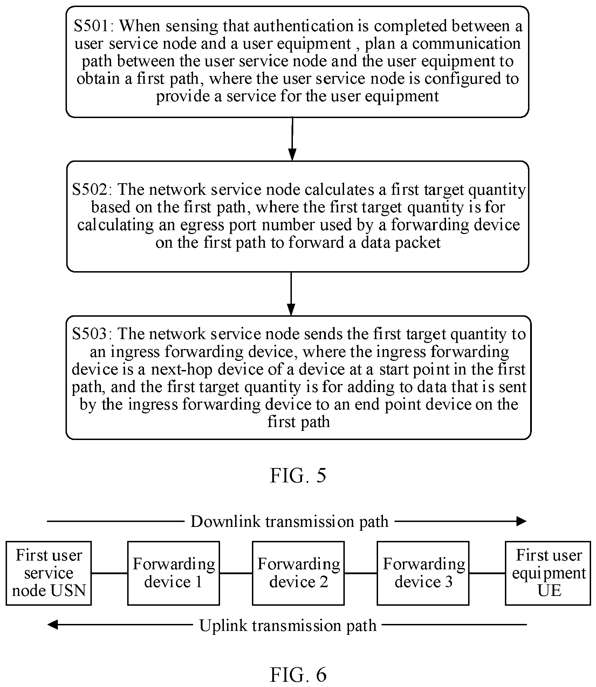

Referring to FIG. 5, the communication processing method provided in this application includes but is not limited to the following steps.

S501: When sensing that authentication between a user service node and a user equipment is completed, plan a communication path between the user service node and the user equipment to obtain a first path, where the user service node is configured to provide a service for the user equipment.

In a specific embodiment, the network service node and the user service node are respectively a network service node NSN and a user service node USN of an edge cloud (or an MEC domain. For ease of description, the MEC domain is referred to as a first MEC domain, and the first MEC domain is used as an example below) in the UCN network architecture described above. For ease of description below, the network service node NSN and the user service node USN are respectively referred to as a first NSN and a first USN. The user equipment in S501 is bound to the first USN.

For ease of subsequent description, the user equipment is referred to as first UE.

In the first MEC domain, the user service node is generated by the network service node first NSN in the first MEC domain. For example, the first USN is used as an example. When the first UE requests, for the first time, to enable a service for the first NSN in the first MEC domain in which the first UE is located, after receiving a service enabling request of the first UE, the first NSN generates one USN for the first UE, where the USN is the first USN.

After generating the first USN, the first NSN participates in and assists the first USN in completing a binding operation with the first UE. For example, the first NSN allocates IP addresses to the first UE and the first USN, and the IP addresses are unique and unchanged in the first MEC domain. Then, the first NSN and the first LTE complete mutual authentication. For a specific authentication manner, for example, refer to authentication manners in standards such as a 3GPP TS23.501 standard, a 3GPP TS33.501 standard, a 3GPP TS33.535 standard, and a 3GPP TS 23.303 standard. Details are not described in this application. After the authentication is completed, both the first USN and the first LTE obtain one twin-globally unique user temporary identity (twin-globally unique temporary identity, TWIN-GUTI), and the TWIN-GUTI identity includes the IP address of the first USN and the IP address of the first UE. Therefore, the first USN obtains the IP address of the first UE through the TWIN-GUTI identity, and the first UE obtains the IP address of the first USN. After authentication is completed between the first USN and the first UE, to be specific, binding between the first USN and the first UE is completed, the first USN may provide the first UE with a service customized by the first UE.

In a process in which the first USN provides a service for the first UE, data communication needs to be performed. In this application, after the first USN is bound to the first UE, the first NSN plans a communication path for communication between the first USN and the first UE. Specifically, the first NSN has a global network topology view in the first MEC domain, to be specific, the first NSN may sense a connection relationship between each device and each node in the first MEC domain. Therefore, the first NSN may plan an optimal transmission path between the first USN and the first UE.

For example, the first NSN may specify a specific path based on requirements such as a bandwidth, a delay, and a constraint condition. When there are a plurality of reachable routes in a network, the first NSN may select a most suitable transmission path based on conditions such as a minimum delay, a minimum hop count, a maximum bandwidth, or load balancing. A communication path planned by the first NSN between the first USN and the first UE may be referred to as a first path.

In this application, complex path calculation is performed by the NSN in a central manner. The network topology changes dynamically, and calculation of the communication path requires powerful calculation power. The NSN is deployed in an edge data center. Compared with the router, the NSN has strong calculation power and a real-time topology in the MEC domain, which may quickly and accurately calculate an optimal path.

S502: The network service node calculates a first target quantity based on the first path, where the first target quantity is for calculating an egress port number used by a forwarding device on the first path to forward a data packet.

In a specific embodiment, after planning a transmission path (namely, the first path) between the first USN and the first UE, the first NSN may implement forwarding of data in the first path by using a residue number system RNS.

Specifically, the first NSN may obtain a group of mutually prime arrays, and a quantity of numbers included in the array is equal to a quantity of forwarding devices included in the first MEC domain. The forwarding device in the domain is a device that is configured to forward data except a user equipment UE, an NSN, and a USN, for example, a router, a base station, a gateway, and the like. Then, the first NSN allocates a number in the mutual prime array to the forwarding device in the first MEC domain. Each forwarding device allocates one number, and sends the number allocated by each forwarding device to a corresponding forwarding device for storage. The number allocated to the forwarding device in the mutual prime array may be referred to as a number of the forwarding device.

After the first NSN obtains the first path between the first USN and the first LTE through planning, the first NSN may obtain numbers of forwarding devices on the first path, and obtain egress port numbers for forwarding data by the forwarding devices.

In a possible implementation, the first path may be a downlink transmission path that uses the first USN as a start point and uses the first UE as an end point. In this case, the first NSN may obtain two arrays. One array is an array including numbers of forwarding devices on the first path, and is referred to as a downlink number array for short. The other array is an array including egress port numbers of data (which may be referred to as downlink data) that is sent by the first USN to the first LTE and that is forwarded by the forwarding devices, and is referred to as a downlink port array for short. Then, the first NSN may obtain one target quantity through calculation based on the downlink number array and the downlink port array. In this application, the target quantity may be referred to as a downlink target quantity, and the downlink target quantity is the first target quantity in S502. A remainder obtained by dividing the downlink target quantity by a number of any device in the forwarding devices is an egress port number corresponding to the device in the downlink port array. Based on the feature, the downlink target quantity may be for calculating an egress port number used by the forwarding device on the first path to forward downlink data.

In another possible implementation, the first path may be an uplink transmission path that uses the first UE as a start point and uses the first USN as an end point. Similarly, the first NSN may obtain two arrays. One array is an array including numbers of forwarding devices on the first path, and is referred to as an uplink number array for short. The other array is an array including egress port numbers of data (which may be referred to as uplink data) that is sent by the first LTE to the first USN and that is forwarded by the forwarding devices, and is referred to as an uplink port array for short. Then, the first NSN may obtain one target quantity through calculation based on the uplink number array and the uplink port array. In this application, the target quantity may be referred to as an uplink target quantity, and the uplink target quantity is the first target quantity in S502. A remainder obtained by dividing the uplink target quantity by a number of any device in the forwarding devices is an egress port number corresponding to the device in the uplink port array. Based on the feature, the uplink target quantity may be for calculating an egress port number used by the forwarding device on the first path to forward uplink data, and a total quantity of port numbers of the forwarding device needs to be less than a number value of the forwarding device.

Optionally, although a start point and an end point of the uplink transmission path are interchanged compared with a start point and an end point of the downlink transmission path, forwarding devices included on the uplink transmission path and the downlink transmission path are the same. Alternatively, optionally, a forwarding device included on the uplink transmission path is different from a forwarding device included on the downlink transmission path. In other words, the uplink data is transmitted on one path, and the downlink data is transmitted on another path.

Regardless of the downlink transmission path or the uplink transmission path, a manner of calculating a corresponding target quantity is the same. For example, a specific calculation manner is as follows.

It is assumed that a number array is {m1, m2, m3, ..., mN} and a port array is {x1, x2, x3, ..., xN}, then

$M = m1*m2*m3*...*mN$; to be specific, M is a product of all numbers in the number array;

$Mi = M/mi$, $i = 1, 2, 3, ..., N$; to be specific, Mi is a product of remainders of Mi in the number array after mi is subtracted;

$Li = (1/Mi)\%mi$, where Li is obtained by subtracting mi from a reciprocal of Mi; and

$X = (L1*M1*x1 + L2*M2*x2 + ... + LN*MN*xN)\%M$, where X is obtained by dividing a sum of all Li*Mi*mi by M, and X is the first target quantity that needs to be calculated.

S503: The network service node sends the first target quantity to an ingress forwarding device, where the ingress forwarding device is a next-hop device of a device at a start point on the first path, and the first target quantity is for adding to data that is sent by the ingress forwarding device to an end point device on the first path.

In a specific embodiment, after obtaining the first target quantity through calculation, the first NSN sends the first target quantity to the next-hop device of the device at the start point on the first path. The next-hop device is an ingress forwarding device on the first path. The ingress forwarding device and the egress forwarding device are relative. If the first path is the foregoing downlink transmission path, a next-hop forwarding device of the first USN on the first path is the ingress forwarding device, and a previous-hop forwarding device of the first UE is the egress forwarding device; and if the first path is the foregoing uplink transmission path, a next-hop forwarding device of the first UE is the ingress forwarding device, and a previous-hop forwarding device of the first USN is the egress forwarding device.

Optionally, if the uplink transmission path and the downlink transmission path include a same forwarding device, the next-hop forwarding device of the first USN on the downlink transmission path is the previous-hop forwarding device of the first USN on the uplink transmission path, and the previous-hop forwarding device of the first LTE on the downlink transmission path is the next-hop forwarding device of the first UE on the uplink transmission path.

For ease of understanding, for example, refer to FIG. 6. In FIG. 6, forwarding devices included in the planned first path include a forwarding device 1, a forwarding device 2, and a forwarding device 3. For a downlink transmission path, the forwarding device 1 is an ingress forwarding device, and the forwarding device 3 is an egress forwarding device. For an uplink transmission path, the forwarding device 3 is an ingress forwarding device, and the forwarding device 1 is an egress forwarding device.

In addition to sending the first target to the ingress forwarding device on the first path, the first NSN further jointly sends the IP address of the first UE and the IP address of the first USN to the ingress forwarding device. After receiving the first target quantity, the first UE, and the IP address of the first USN, the ingress forwarding device stores the information for subsequent data forwarding.

In a possible implementation, the first NSN encapsulates the first target quantity, the IP address of the first UE, and the IP address of the first USN into a format of one data packet header, and sends the data packet header to the ingress forwarding device. A source address and a destination address are specified in the data packet header. The data packet header may be referred to as an RNS header.

Specifically, if the first path is an uplink transmission path, the target quantity sent by the first NSN to the ingress forwarding device of the first path is the uplink target quantity, and it indicates that a source address and a destination address that are associated with the uplink target quantity are respectively an address of the first UE and an address of the first USN. If the first path is a downlink transmission path, the target quantity sent by the first NSN to the ingress forwarding device of the first path is the downlink target quantity, and it indicates that a source address and a destination address that are associated with the downlink target quantity are respectively an address of the first USN and an address of the first UE. For ease of understanding, refer to Table 1.

**Table 1**

| Target quantity | Associated source address | Associated destination address |
|---|---|---|
| Uplink target quantity | Address of a first USN | Address of a first USN |
| Downlink target quantity | Address of a first USN | Address of a first USN |

After the foregoing operations, data transmission may be implemented between the first LTE and the first USN. After receiving data (including a data packet, a control instruction packet, or the like) that needs to be forwarded, the ingress forwarding device on the first path finds a corresponding target quantity, namely, the first target quantity, in a local memory based on a source address and a destination address in the data, adds the first target quantity to the data, for example, adds the first target quantity to a data packet header or a packet header of a command packet, calculates an egress port number of the data based on the first target quantity, and sends, to the next-hop forwarding device from a port corresponding to the egress port number, the data to which the target quantity is added. Similarly, after receiving the data, a subsequent forwarding device obtains the first target quantity in the data, calculates an egress port number of the data based on the first target quantity, and then sends the data from a port corresponding to the egress port number to the next-hop forwarding device. When the data is sent to the egress forwarding device, the egress forwarding device obtains an egress port number through calculation based on the first target quantity in the data, removes the first target quantity from the data, and then forwards, from an egress port corresponding to the egress port number, the data from which the first target quantity is removed.

In a possible implementation, after the first UE is bound to the first USN, the first NSN may plan both the uplink transmission path and the downlink transmission path between the first UE and the first USN; or optionally, after the first UE is bound to the first USN, the first NSN may plan only the uplink transmission path from the first UE to the first USN; or, optionally, after the first LTE is bound to the first USN, the first NSN may plan only the downlink transmission path from the first USN to the first UE.

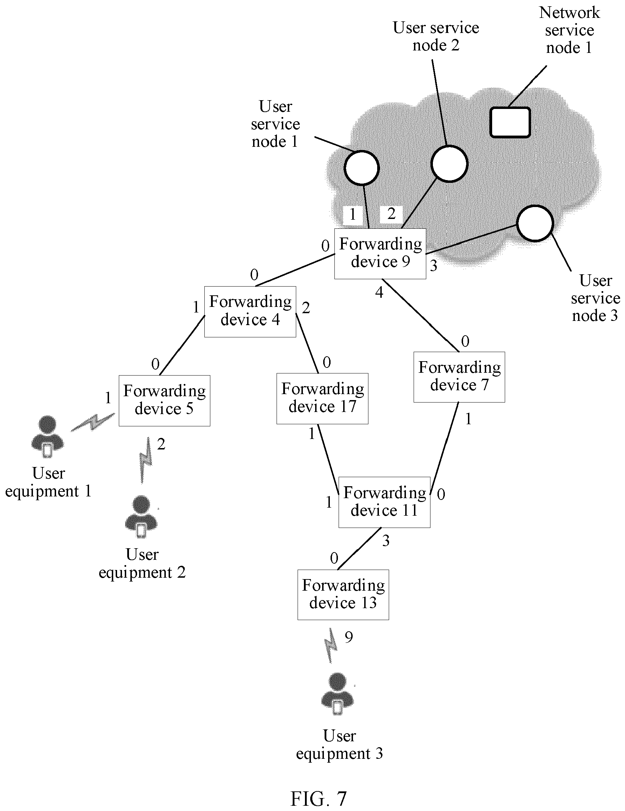

For ease of understanding the communication processing method described above, the following separately describes a downlink data transmission process and an uplink data transmission process by using examples. For example, FIG. 7 is an example of a schematic diagram of a network architecture in one MEC domain. It may be learned that numbers of forwarding devices are mutually prime values, each forwarding device includes a plurality of communication ports, and each communication port has a corresponding port number.

First, downlink data transmission between a user service node 1 (USN 1 for short) and a user equipment 1 (LTE 1 for short) in FIG. 7 is used as an example. After the USN 1 is bound to the UE 1, a network service node 1 (NSN 1 for short) may view, based on a global view in the MEC domain, two paths from the USN 1 to the UE 1 (there may be more paths in an actual network). A first path is a forwarding device 9→a forwarding device 4→a forwarding device 5; a second path is a forwarding device 9→a forwarding device 7→a forwarding device 11→a forwarding device 17→a forwarding device 4→7a forwarding device 5; and if planning is performed from a perspective of a minimum delay or a minimum adjustment quantity, the first path is selected, to plan a routing path. Then, a target quantity 81 is obtained through calculation based on the number of the forwarding device on the first path and each egress port number. A specific calculation process is as follows.

If a downlink number array corresponding to the first path is {m1, m2, m3}={9, 4, 5}, and a downlink port array is {x1, x2, x3}={0, 1, 1}, then

$$M=m1*m2*m3=9*4*5=180;$$

$$M1=M/m1=180/9=20, \quad M2=M/m2=180/4=45, \text{ and } M3=M/m3=180/5=36;$$

$$L1=(1/M1)\%m1=(1/20)\%9=5, \qquad L2=(1/M2)\%m2=(1/45)\%4=1,$$

and

$$L3=(1/M3)\%m3=(1/36)\%5=1;$$

and

$$X=(L1*M1*x1+L2*M2*x2+L3*M3*x3)=(5*20*0+1*45*1+1*36*1)\%180=81.$$

After obtaining the target quantity 81 through calculation, the NSN 1 sends 81 and the source address (the address of the USN 1) and the destination address (the address of the UE 1) that are associated with 81 to the ingress forwarding device (the forwarding device 9).

After receiving a data packet from the USN 1, the forwarding device 9 may parse the data packet, learn that a source address of the data packet is an address of the USN 1 and a destination address of the data packet is an address of the UE 1, find a corresponding target quantity 81 locally, and then add the target quantity 81 to a header of the data packet. In addition, the forwarding device obtains an egress port number of the data packet through calculation based on the target quantity 81. Specifically, the target quantity 81 is used to perform a modulo operation on a number 9 of the forwarding device 9 to obtain a remainder 0, and 0 is the egress port number of the data packet. Then, the forwarding device 9 forwards the data packet that carries the target quantity 81 from a port 0.

A data packet forwarded by the port 0 of the forwarding device 9 is transmitted to the forwarding device 4. The forwarding device 4 receives the data packet, obtains the target quantity 81 in the data packet header, and performs a modulo operation on a number 4 of a forwarding device 4 by using the target quantity 81 to obtain a remainder 1, where 1 is the egress port number of the data packet. Then, the forwarding device 4 re-encapsulates the data packet and forwards the data packet from the port 1.

A data packet forwarded by the port 1 of the forwarding device 4 is transmitted to the forwarding device 5. The forwarding device 5 receives the data packet, obtains the target quantity 81 in the data packet header, and performs a modulo operation on a number 5 of a forwarding device 5 by using the target quantity 81 to obtain a remainder 1, where 1 is the egress port number of the data packet. In addition, because the port 1 of the forwarding device 5 is connected to a destination UE 1, the forwarding device 5 removes the target quantity 81 from the received data packet header, and then forwards the data packet from the port 1 to the UE 1.

The following uses uplink data transmission between the USN 1 and the UE 1 in FIG. 7 as an example. After the USN 1 is bound to the LTE 1, the network service node 1 (NSN 1 for short) plans, based on a global view in the MEC domain, a transmission path from the UE 1 to the USN 1 as follows: a forwarding device 5→a forwarding device 4→a forwarding device 9. Then, a target quantity 100 is obtained through calculation based on the number of the forwarding device on the path and each egress port number. A specific calculation process is as follows:

If a downlink number array corresponding to the first path is {m1, m2, m3}={5, 4, 9}, and a downlink port array is {x1, x2, x3}={0, 0, 1}, then

$$M=m1*m2*m3=5*4*9=180;$$

$$M1=M/m1=180/5=36, M2=M/m2=180/4=45, \text{ and } M3=M/m3=180/9=20;$$

$$L1=(1/M1)\%m1=(1/36)\%5=1, \qquad L2=(1/M2)\%m2=(1/45)\%4=1,$$

and

$$L3=(1/M3)\%m3=(1/20)\%9=5;$$

and

$$X=(L1*M1*x1+L2*M2*x2+L3*M3*x3)=(1*36*0+1*45*0+5*20*1)\%180=100.$$

After obtaining the target quantity 100 through calculation, the NSN 1 sends 100 and the source address (the address of the UE 1) and the destination address (the address of the USN 1) that are associated with 100 to the ingress forwarding device (the forwarding device 5).

After receiving a data packet from the UE 1, the forwarding device 5 may parse the data packet, learn that a source address of the data packet is an address of the LTE 1 and a destination address of the data packet is an address of the USN 1, find a corresponding target quantity 100 locally, and then add the target quantity 100 to the data packet header. In addition, the forwarding device obtains an egress port number of the data packet through calculation based on the target quantity 100. Specifically, the target quantity 100 is used to perform a modulo operation on a number 5 of the forwarding device 5 to obtain a remainder 0, and 0 is the egress port number of the data packet. Then, the forwarding device 5 forwards the data packet that carries the target quantity 100 from a port 0.

A data packet forwarded by the port 0 of the forwarding device 5 is transmitted to the forwarding device 4. The forwarding device 4 receives the data packet, obtains the target quantity 100 in the data packet header, and performs a modulo operation on a number 4 of a forwarding device 4 by using the target quantity 100 to obtain a remainder 0, where 0 is the egress port number of the data packet. Then, the forwarding device 4 re-encapsulates the data packet and forwards the data packet from the port 0.

A data packet forwarded by the port 0 of the forwarding device 4 is transmitted to the forwarding device 9. The forwarding device 9 receives the data packet, obtains the target quantity 100 in the data packet header, and performs a modulo operation on a number 9 of a forwarding device 9 by using the target quantity 100 to obtain a remainder 1, where 1 is the egress port number of the data packet. In addition, because the port 1 of the forwarding device 9 is connected to a destination USN 1, the forwarding device 9 removes the target quantity 100 from the received data packet header, and then forwards the data packet from the port 1 to the USN 1.

It should be noted that the communication processing method provided in this application described in FIG. 7 is described by using data packet sending as an example. However, the communication processing method is not limited to use in a case of data packet communication, and may also be used in a case of information communication such as a control command. A type of communication information is not limited in the communication processing method provided in this application. In addition, forwarding devices included on the uplink transmission path and the downlink transmission path between the UE 1 and the USN 1 in FIG. 7 are the same, namely, the forwarding device 4, the forwarding device 5, and the forwarding device 9. However, in an actual implementation process, forwarding devices included on the uplink transmission path and the downlink transmission path between the UE and a USN corresponding to the UE may be different, to be specific, the uplink transmission path and the downlink transmission path may be different paths.

In a possible implementation, when the first path cannot perform communication between the first USN and the first UE, the first NSN may replan a communication path between the first UE and the first USN to obtain a second path; then, calculate a second target quantity based on the second path, and send the second target quantity to an ingress forwarding device of the second path, where the second target quantity is for calculating an egress port number used by a forwarding device on the second path to forward data; and the second target quantity is for adding to data that is sent by the ingress forwarding device to an end point device on the second path.

In a specific embodiment, when the first path is faulty or congested, or an access device connected to the first UE in the first MEC domain is switched, or the like, the first NSN may replan a communication path between the first UE and the first USN. Switching of the access device connected to the first LTE in the first MEC domain may be, for example, switching of a base station connected to the first UE in the first MEC domain from the first base station to the second base station.

After planning the second path, the first NSN also calculates a second target quantity corresponding to the second path, and then delivers the second target quantity to the ingress forwarding device on the second path, and the like. For specific implementation, refer to the description of the communication processing method shown in FIG. 5. Details are not described herein again.

In a possible implementation, the ingress forwarding device on the second path and the ingress forwarding device on the first path are a same device. For example, when an access device of the first UE is switched, a next-hop device from the first USN to the first UE does not change. For another example, a forwarding device in the middle of the first path is faulty, but neither the first LTE nor the next-hop device of the first USN changes. In this case, after receiving the second target quantity, the ingress forwarding device on the second path may replace the locally stored first target quantity with the second target quantity.

In embodiments of this application, a probability of communication interruption between the first UE and the first USN may be reduced, and communication performance of an entire communication network may be improved.

In summary, in the communication processing method provided in this application, first, the network service node NSN has a global network topology view, and may specify a specific path based on requirements such as a bandwidth, a delay, and a constraint condition, to implement functions such as traffic engineering, so that a communication path between the UE and the USN may be quickly planned.

In addition, in the communication processing method in this application, a routing table is not required. This avoids a problem of routing table expansion caused by a traffic surge. In addition, complex path calculation is performed by the NSN in a central manner. Compared with the existing MPLS and SR, the communication processing method reduces a load of a forwarding device, and greatly reduces complex configuration.

In addition, because the UE is bound to the USN of the UE, an uplink transmission path is definitely from the UE to the USN of the UE, and a downlink transmission path is definitely from the USN to the corresponding UE of the USN. Therefore, for uplink and downlink data, when the UE is initially bound to the USN of the UE, the NSN performs routing calculation between the UE and the USN, and delivers a corresponding target quantity to an ingress forwarding device of the communication path. The target quantity may be repeatedly used, and does not need to be frequently calculated subsequently unless a routing condition changes; and unlike a routing solution in which an OpenFlow or KeyFlow protocol is used, each time a new data packet reaches an ingress router, a packet-in message needs to be triggered. The data packet is thrown to a controller, and the controller replans a route. In other words, in this application, a processing load of the NSN may be greatly reduced, and performance of the NSN may be improved. In addition, because the communication path does not need to be calculated in real time, a signaling communication load may be further reduced, a data transmission delay may be further reduced, and data transmission efficiency may be improved.

In addition, in a routing solution in which the OpenFlow or KeyFlow protocol is used, when performing data forwarding, the ingress router still needs to query a table to obtain the egress port number, instead of calculating the egress port number through a target quantity. Therefore, compared with this, in this application, the ingress forwarding device calculates an egress port number of data through the target quantity, and does not need to search for an egress port number by querying a table. This resolves a problem such as occupation of excessive storage resources caused by expansion of a routing table or a flow table. In addition, in the foregoing routing solution in which the OpenFlow or KeyFlow protocol is used, a modified-field action message further needs to be sent to the ingress router to indicate the ingress router to add the target quantity to the data packet header, and a modified-field action message needs to be sent to the egress router to indicate the egress router to remove the target quantity from the data packet header. A procedure is complex and communication resources are occupied. However, the two steps do not need to be performed in this application. This simplifies an operation procedure and saves the communication resources.

In addition, the communication processing method in this application meets a requirement for data forwarding that is more distributed, dynamic, and is of a short distance/short hop counts a distributed DC/MEC-centric traffic model in the future, and is perfectly combined with a distributed MEC architecture. Compared with a current mainstream SR solution and a KeyFlow+SDN solution, the communication processing method is simpler in configuration and protocols, and may greatly reduce deployment and maintenance costs and improve deployment and maintenance efficiency.

The foregoing mainly describes the communication processing method provided in embodiments of this application. It may be understood that, to implement the foregoing functions, each device includes corresponding hardware structures and/or software modules for performing corresponding functions. Units and steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into function modules based on the foregoing method examples. For example, each function module may be obtained through division based on each corresponding function, or two or more functions may be integrated into one module. The integrated module may be implemented in a form of hardware, or may be implemented in a form of a software functional module. It should be noted that, in embodiments of this application, division into modules is an example, and is merely a logical function division. In an actual implementation, another division manner may be used.

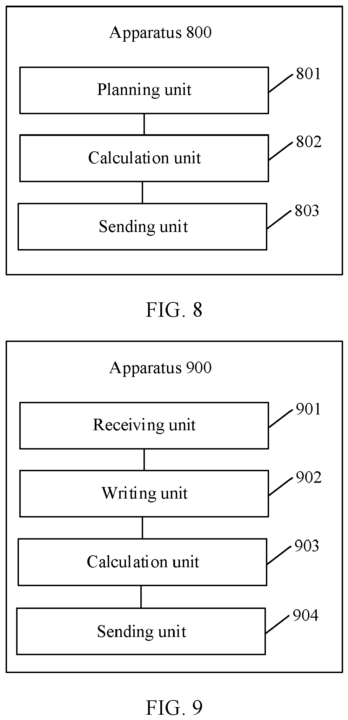

When each functional module is obtained through division based on each corresponding function, FIG. 8 is a possible schematic diagram of a logical structure of an apparatus. The apparatus may be an apparatus (for example, a server, a chip, or a processing system in which the network service node is located) in which the network service node is located. The apparatus 800 includes a planning unit 801, a calculation unit 802, and a sending unit 803.

The planning unit 801 is configured to: when sensing that authentication between a user service node and a user equipment is completed, plan a communication path between the user service node and the user equipment to obtain a first path, where the user service node is configured to provide a service for the user equipment;

the calculation unit 802 is configured to calculate a first target quantity based on the first path, where the first target quantity is for calculating an egress port number used by a forwarding device on the first path to forward data; and the sending unit 803 is configured to send the first target quantity to an ingress forwarding device, where the ingress forwarding device is a next-hop device of a device at a start point on the first path, and the first target quantity is for adding to data that is sent by the ingress forwarding device to an end point device on the first path.

In a possible implementation, the user service node and the user equipment belong to a node covered by a same edge cloud.

In a possible implementation, the planning unit 801 is further configured to: when the first path cannot perform communication between the user service node and the user equipment, plan a communication path between the user equipment and the user service node to obtain a second path, where

the calculation unit 802 is further configured to calculate a second target quantity based on the second path, where the second target quantity is for calculating an egress port number used by a forwarding device on the second path to forward data; and

the sending unit 803 is further configured to send the second target quantity to the ingress forwarding device, where the second target quantity is for adding to data that is sent by the ingress forwarding device to an end point device on the second path.

In a possible implementation, the first path is a path from the user equipment to the user service node; the ingress forwarding device is an access device that enables the user equipment to access a communication network; and that the first path cannot perform communication between the user service node and the user equipment includes: changing an access device that enables the user equipment to access the communication network.

For specific operations and beneficial effects of the units in the apparatus 800 shown in FIG. 8, refer to corresponding descriptions in FIG. 5 and possible method embodiments in FIG. 5. Details are not described herein again.

When each functional module is obtained through division based on each corresponding function, FIG. 9 is a possible schematic diagram of a logical structure of an apparatus. The apparatus may be the foregoing ingress forwarding device, a chip of the ingress forwarding device, a processing system, or the like. The apparatus 900 includes a receiving unit 901, a writing unit 902, a calculation unit 903, and a sending unit 904.

The receiving unit 901 is configured to receive a first target quantity, where the first target quantity is used to forward communication data between a user service node and a user equipment based on a first path, the first path is obtained through planning when authentication between the user service node and the user equipment is completed, and the user service node is configured to provide a service for the user equipment, where

the receiving unit 901 is further configured to receive first data, and find the first target quantity based on the first data;

the writing unit 902 is configured to write the first target quantity into the first data to obtain second data;

the calculation unit 903 is configured to calculate an egress port number based on the first target quantity; and

the sending unit 904 is configured to send the second data from the egress port number.

In a possible implementation, the receiving unit 901 is further configured to:

receive a second target quantity, and replace the locally stored first target quantity with the second target quantity, where the second target quantity is used to forward communication data between the user service node and the user equipment based on a second path, and the second path is obtained through planning when the first path cannot perform communication between the user service node and the user equipment.

For specific operations and beneficial effects of the units in the apparatus 900 shown in FIG. 9, refer to corresponding descriptions in FIG. 5 and possible method embodiments in FIG. 5. Details are not described herein again.

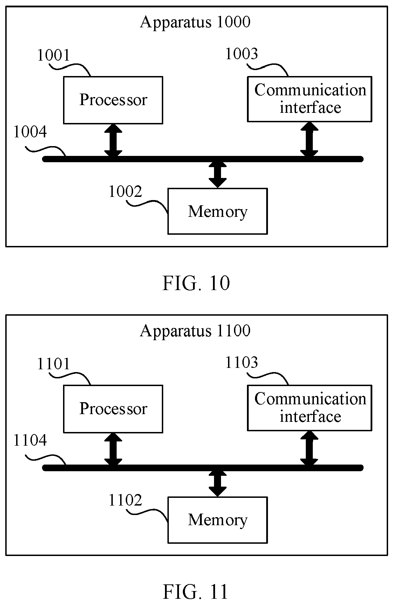

FIG. 10 is a possible schematic diagram of a structure of hardware of an apparatus according to this application. The apparatus may be an apparatus (for example, a server, a chip, or a processing system in which the network service node is located) in which the network service node in the method in the foregoing embodiments is located. The apparatus 1000 includes: a processor 1001, a memory 1002, and a communication interface 1003. The processor 1001, the communication interface 1003, and the memory 1002 may be connected to each other or connected to each other through a bus 1004.

For example, the memory 1002 is configured to store a computer program and data of the apparatus 1000. The memory 1002 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

The communication interface 1003 includes a sending interface and a receiving interface. There may be a plurality of communication interfaces 1003, and the communication interfaces 1003 are configured to support the apparatus 1000 in performing communication, for example, receiving or sending data or a message.

For example, the processor 1001 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of the digital signal processor and a microprocessor. The processor 1001 may be configured to read a program stored in the memory 1002, to enable the apparatus 1000 to perform an operation performed by an NSN in any communication processing method described in FIG. 5 and possible embodiments in FIG. 5.

In a possible implementation, the processor 1001 may be configured to read a program stored in the memory 1002, to perform the following operations:

when sensing that authentication between a user service node and a user equipment is completed, planning a communication path between the user service node and the user equipment to obtain a first path, where the user service node is configured to provide a service for the user equipment; calculating a first target quantity based on the first path, where the first target quantity is for calculating an egress port number used by a forwarding device on the first path to forward data; and sending the first target quantity to an ingress forwarding device through a communication interface, where the ingress forwarding device is a next-hop device of a device at a start point in the first path, and the first target quantity is for adding to data that is sent by the ingress forwarding device to an end point device in the first path.

For specific operations and beneficial effects of the units in the apparatus 1000 shown in FIG. 10, refer to corresponding descriptions in FIG. 5 and possible method embodiments in FIG. 5. Details are not described herein again.

FIG. 11 is a possible schematic diagram of a hardware structure of an apparatus according to this application. The apparatus may be the ingress forwarding device, a chip of the ingress forwarding device, a processing system, or the like in the method in the foregoing embodiments. The apparatus 1100 includes: a processor 1101, a memory 1102, and a communication interface 1103. The processor 1101, the communication interface 1103, and the memory 1102 may be connected to each other or connected to each other through a bus 1104.

For example, the memory 1102 is configured to store a computer program and data of the apparatus 1100. The memory 1102 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

The communication interface 1103 includes a sending interface and a receiving interface. There may be a plurality of communication interfaces 1103, and the communication interfaces 1103 are configured to support the apparatus 1100 in performing communication, for example, receiving or sending data or a message.

For example, the processor 1101 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of the digital signal processor and a microprocessor. The processor 1101 may be configured to read a program stored in the memory 1102, to enable the apparatus 1100 to perform an operation performed by the ingress forwarding device in any communication processing method described in FIG. 5 and possible embodiments in FIG. 5.

In a possible implementation, the processor 1101 may be configured to read a program stored in the memory 1102, to perform the following operations:

receiving a first target quantity through a communication interface, where the first target quantity is used to forward communication data between a user service node and a user equipment based on a first path, the first path is obtained through planning when authentication between the user service node and the user equipment is completed, and the user service node is configured to provide a service for the user equipment; receiving first data through the communication interface, and finding the first target quantity based on the first data; writing the first target quantity into the first data to obtain second data; and calculating an egress port number based on the first target quantity, and sending the second data from the egress port number through the communication interface.

For specific operations and beneficial effects of the units in the apparatus 1100 shown in FIG. 11, refer to corresponding descriptions in FIG. 5 and possible method embodiments in FIG. 5. Details are not described herein again.

Embodiments of this application further provide a computer-readable storage medium. The computer-readable storage medium stores a computer program. The computer program is executed by a processor to implement operations performed by the NSN in the method in any one of the method embodiments in FIG. 5 and possible embodiments in FIG. 5; or the computer program is executed by a processor to implement operations performed by the ingress forwarding device in the method in any one of the method embodiments in FIG. 5 and possible embodiments in FIG. 5.

Embodiments of this application further provide a computer program product. When the computer program product is read and executed by a computer, operations performed by the NSN in the method in any one of the foregoing method embodiments in FIG. 5 and possible method embodiments in FIG. 5 are performed, or an operation performed by an ingress forwarding device in the method in any one of the foregoing method embodiments in FIG. 5 and possible method embodiments in FIG. 5 is performed.

In summary, after the user equipment (user equipment, UE) is bound to the user service node USN, a communication path between the user equipment (user equipment, UE) and the user service node USN is planned, and communication between the user equipment (user equipment, UE) and the user service node USN is implemented based on a method of a residue number system. Because the UE is bound to the USN of the UE, an uplink transmission path is definitely from the UE to the USN of the UE, and a downlink transmission path is definitely from the USN to the corresponding UE of the USN. Therefore, for uplink and downlink data, when the UE is initially bound to the USN of the UE, the NSN performs routing calculation between the UE and the USN, and delivers a corresponding target quantity to an ingress forwarding device of the communication path. The target quantity may be repeatedly used, and does not need to be frequently calculated subsequently unless a routing condition changes; and unlike an OpenFlow or KeyFlow protocol in the existing solution in which each time one new data packet reaches an ingress router, a packet-in message needs to be triggered, the data packet is thrown to a controller, and the controller replans a route. In other words, in this application, a processing load of the NSN may be greatly reduced, and performance of the NSN may be improved. In addition, because the communication path does not need to be calculated in real time, a signaling communication load may be further reduced, a data transmission delay may be further reduced, and data transmission efficiency may be improved.

In addition, the communication processing method in this application meets a requirement for data forwarding that is more distributed, dynamic, and is of a short distance/short hop counts a distributed DC/MEC-centric traffic model in the future, and is perfectly combined with a distributed MEC architecture. Compared with a current mainstream SR solution and a KeyFlow+SDN solution, the communication processing method is simpler in configuration and protocols, and may greatly reduce deployment and maintenance costs and improve deployment and maintenance efficiency.

In addition, in the communication processing method in this application, a routing table is not required. This avoids a problem of routing table expansion caused by a traffic surge. In addition, complex path calculation is performed by the NSN in a central manner. Compared with the existing MPLS and SR, the communication processing method reduces a load of a forwarding device, and greatly reduces complex configuration.

Finally, it should be noted that the foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of embodiments of this application.

**Claims**

1. A communication processing method, wherein the method comprises:

   when sensing that authentication between a user service node and a user equipment is completed, planning a communication path between the user service node and the user equipment to obtain a first path, wherein the user service node is configured to provide a service for the user equipment;
   calculating a first target quantity based on the first path, wherein the first target quantity is for calculating an egress port number used by a forwarding device on the first path to forward data; and
   sending the first target quantity to an ingress forwarding device, wherein the ingress forwarding device is a next-hop device of a device at a start point on the first path, and the first target quantity is for adding to data that is sent by the ingress forwarding device to an end point device on the first path.

2. The method according to claim 1, wherein the user service node and the user equipment belong to a node covered by a same edge cloud.

3. The method according to claim 1 or 2, wherein the method further comprises:

   when the first path cannot perform communication between the user service node and the user equipment, planning a communication path between the user equipment and the user service node to obtain a second path;
   calculating a second target quantity based on the second path, wherein the second target quantity is for calculating an egress port number used by a forwarding device on the second path to forward data; and
   sending the second target quantity to the ingress forwarding device, wherein the second target quantity is for adding to data that is sent by the ingress forwarding device to an end point device on the second path.

4. The method according to claim 3, wherein the first path is a path from the user equipment to the user service node; the ingress forwarding device is an access device that enables the user equipment to access a communication network; and
   that the first path cannot perform communication between the user service node and the user equipment comprises:
   the access device that enables the user equipment to access the communication network is changed.

5. A communication processing method, wherein the method comprises:

   receiving a first target quantity, wherein the first target quantity is used to forward communication data between a user service node and a user equipment based on a first path, the first path is obtained through planning when authentication between the user service node and the user equipment is completed, and the user service node is configured to provide a service for the user equipment;
   receiving first data, and finding the first target quantity based on the first data;

writing the first target quantity into the first data to obtain second data; and
calculating an egress port number based on the first target quantity, and sending the second data from the egress port number.

6. The method according to claim 5, wherein the method further comprises:
receiving a second target quantity, and replacing the locally stored first target quantity with the second target quantity, wherein the second target quantity is used to forward communication data between the user service node and the user equipment based on a second path, and the second path is obtained through planning when the first path cannot perform communication between the user service node and the user equipment.

7. A communication processing apparatus, wherein the apparatus comprises:

   a planning unit, configured to: when sensing that authentication between a user service node and a user equipment is completed, plan a communication path between the user service node and the user equipment to obtain a first path, wherein the user service node is configured to provide a service for the user equipment;
   a calculation unit, configured to calculate a first target quantity based on the first path, wherein the first target quantity is for calculating an egress port number used by a forwarding device on the first path to forward data; and
   a sending unit, configured to send the first target quantity to an ingress forwarding device, wherein the ingress forwarding device is a next-hop device of a device at a start point on the first path, and the first target quantity is for adding to data that is sent by the ingress forwarding device to an end point device on the first path.

8. The apparatus according to claim 7, wherein the user service node and the user equipment belong to a node covered by a same edge cloud.

9. The apparatus according to claim 7 or 8, wherein

   the planning unit is further configured to: when the first path cannot perform communication between the user service node and the user equipment, plan a communication path between the user equipment and the user service node to obtain a second path;
   the calculation unit is further configured to calculate a second target quantity based on the second path, wherein the second target quantity is for calculating an egress port number used by a forwarding device on the second path to forward data; and
   the sending unit is further configured to send the second target quantity to the ingress forwarding device, wherein the second target quantity is for adding to data that is sent by the ingress forwarding device to an end point device on the second path.

10. The apparatus according to claim 9, wherein the first path is a path from the user equipment to the user service node; the ingress forwarding device is an access device that enables the user equipment to access a communication network; and
that the first path cannot perform communication between the user service node and the user equipment comprises: the access device that enables the user equipment to access the communication network is changed.

11. A communication processing apparatus, wherein the apparatus comprises:

   a receiving unit, configured to receive a first target quantity, wherein the first target quantity is used to forward communication data between a user service node and a user equipment based on a first path, the first path is obtained through planning when authentication between the user service node and the user equipment is completed, and the user service node is configured to provide a service for the user equipment, wherein the receiving unit is further configured to receive first data, and find the first target quantity based on the first data;
   a writing unit, configured to write the first target quantity into the first data to obtain second data;
   a calculation unit, configured to calculate an egress port number based on the first target quantity; and
   a sending unit, configured to send the second data from the egress port number.

12. The apparatus according to claim 11, wherein the receiving unit is further configured to:
receive a second target quantity, and replace the locally stored first target quantity with the second target quantity, wherein the second target quantity is used to forward communication data between the user service node and the user equipment based on a second path, and the second path is obtained through planning when the first path cannot perform communication between the user service node and the user equipment.

13. A communication processing apparatus, comprising a processor and a memory, wherein the memory is configured to store a computer program, and the processor is configured to invoke the computer program, to enable the apparatus to perform the method according to any one of claims 1 to 4.

14. A communication processing apparatus, comprising a processor and a memory, wherein the memory is configured to store a computer program, and the processor is configured to invoke the computer program, to enable the apparatus to perform the method according to claim 5 or 6.

15. A computer-readable storage medium, wherein the computer-readable storage medium stores a computer program, and the computer program is executed by a processor to implement the method according to any one of claims 1 to 4; or the computer program is executed by a processor to implement the method according to claim 5 or 6.

16. A computer program product, wherein when the computer program product runs on a computer, the computer is enabled to perform the method according to any one of claims 1 to 4, or the computer is enabled to perform the method according to claim 5 or 6.

| Terminal | Edge cloud | Core cloud |

FIG. 1

FIG. 2

Access device     User equipment    Forwarding device

Network service node    User service node    Network service node interconnection

FIG. 3

Simplify an aggregation layer and change a ring network to a tree network

FIG. 4

S501: When sensing that authentication is completed between a user service node and a user equipment , plan a communication path between the user service node and the user equipment to obtain a first path, where the user service node is configured to provide a service for the user equipment

S502: The network service node calculates a first target quantity based on the first path, where the first target quantity is for calculating an egress port number used by a forwarding device on the first path to forward a data packet

S503: The network service node sends the first target quantity to an ingress forwarding device, where the ingress forwarding device is a next-hop device of a device at a start point in the first path, and the first target quantity is for adding to data that is sent by the ingress forwarding device to an end point device on the first path

FIG. 5

———————————— Downlink transmission path ————————→

| First user service node USN | Forwarding device 1 | Forwarding device 2 | Forwarding device 3 | First user equipment UE |

←———————— Uplink transmission path ————————

FIG. 6

FIG. 7

Apparatus 800

Planning unit — 801

Calculation unit — 802

Sending unit — 803

FIG. 8

Apparatus 900

Receiving unit — 901

Writing unit — 902

Calculation unit — 903

Sending unit — 904

FIG. 9

FIG. 10

FIG. 11

## INTERNATIONAL SEARCH REPORT

| International application No. |
|---|
| **PCT/CN2022/093444** |

| A. | CLASSIFICATION OF SUBJECT MATTER |
|---|---|

H04W 40/02(2009.01)i

According to International Patent Classification (IPC) or to both national classification and IPC

| B. | FIELDS SEARCHED |
|---|---|

Minimum documentation searched (classification system followed by classification symbols)

H04W 40/-

Documentation searched other than minimum documentation to the extent that such documents are included in the fields searched

Electronic data base consulted during the international search (name of data base and, where practicable, search terms used)

CNABS; CNTXT; CNKI: UCN, 用户中心网络, RNS, 余数系统, CRT, 余数定理, 取余, 求余, 取模, mod, 路径, 路由, 表, 计算, 哈希, hash, 出端口, 端口号; VEN; WOTXT; EPTXT; USTXT; 3GPP: UCN, NSN, USN, MEC, RNS, CRT, mod, path, route?, hash, port?, out

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 108064443 A (CLOUDMINDS (SHENZHEN) ROBOTICS SYSTEMS CO., LTD.) 22 May 2018 (2018-05-22)<br>description, paragraphs [0047]-[0069] | 1-16 |
| Y | CN 108282402 A (CENTRAL SOUTH UNIVERSITY) 13 July 2018 (2018-07-13)<br>description, paragraphs [0061]-[0064] | 1-16 |
| A | CN 111600754 A (CHONGQING UNIVERSITY OF POSTS AND TELECOMMUNICATIONS) 28 August 2020 (2020-08-28)<br>entire document | 1-16 |
| A | CN 109150604 A (NARI GROUP CORPORATION et al.) 04 January 2019 (2019-01-04)<br>entire document | 1-16 |
| A | CN 112637368 A (JIANGSU JINHENG INFORMATION TECHNOLOGY CORP.) 09 April 2021 (2021-04-09)<br>entire document | 1-16 |
| A | US 2015207724 A1 (JUNIPER NETWORKS, INC.) 23 July 2015 (2015-07-23)<br>entire document | 1-16 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 August 2022** | **26 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/093444**

| Patent document cited in search report | | | Publication date (day/month/year) | Patent family member(s) | | | Publication date (day/month/year) |
|---|---|---|---|---|---|---|---|
| CN | 108064443 | A | 22 May 2018 | WO | 2019061521 | A1 | 04 April 2019 |
| | | | | CN | 108064443 | B | 06 August 2021 |
| CN | 108282402 | A | 13 July 2018 | CN | 108282402 | B | 09 June 2020 |
| CN | 111600754 | A | 28 August 2020 | CN | 111600754 | B | 25 February 2022 |
| | | | | WO | 2021227245 | A1 | 18 November 2021 |
| | | | | KR | 20220006588 | A | 17 January 2022 |
| CN | 109150604 | A | 04 January 2019 | CN | 109150604 | B | 25 January 2022 |
| CN | 112637368 | A | 09 April 2021 | CN | 112637368 | B | 14 May 2021 |
| US | 2015207724 | A1 | 23 July 2015 | US | 2015304209 | A1 | 22 October 2015 |
| | | | | US | 9596169 | B2 | 14 March 2017 |
| | | | | US | 9100285 | B1 | 04 August 2015 |

**EP 4 329 374 A1**

**Patent documents cited in the description**

- CN 202110557277